# EUROPÄISCHE PATENTSCHRIFT

(11) **EP 1 431 354 B1**
(45) Veröffentlichungstag und Bekanntmachung des Hinweises auf die Patenterteilung: **27.08.2008**
(21) Anmeldenummer: 03028935.9
(22) Anmeldetag: 17.12.2003
(51) Int. Cl.: C09D 7/12, C09D 1/04

(54) **Stabilisatoren für Wasserglassysteme**
Stabilizers for waterglass systems
Stabilisateurs pour des systèmes à base de verre soluble

(30) Priorität: 21.12.2002 DE 10260540
(43) Veröffentlichungstag der Anmeldung: 23.06.2004
(73) Patentinhaber: BK Giulini GmbH, 67065 Ludwigshafen (DE)
(72) Erfinder: Staffel, Thomas , Dr., 67269 Grünstadt (DE); Weber, Siegbert, 68526 Ladenburg (DE); Wahl, Friedrich, 68 219 Mannheim (DE)

(56) Entgegenhaltungen:
- WO-A-02/22745
- GB-A- 1 017 456
- US-A- 3 625 722
- US-A- 4 308 061

## Beschreibung

Die Erfindung betrifft Stabilisatoren für Organosilikatputze,- und Farben, im allgemeinen für Wasserglassysteme. Diese Systeme enthalten enthalten Silikate als Bindemittel.

In der Praxis hat sich gezeigt, daß das enthaltene Silikat, sowohl bei den Putzen, als auch bei den Farben im Laufe der Zeit mit anderen Inhaltsstoffen der Putz- bzw. Farbrezepturen reagiert. Dies führt zu einer Eindickung der Produkte und kann ihre völlige Unbrauchbarkeit bewirken. Um dies zu verhindern, ist es im Stand der Technik bereits bekannt, Stabilisatoren hinzuzufügen. Im Markt erhältliche Produkte enthalten quarternisierte Ammoniumverbindungen. Diese Verbindungen enthalten beträchtliche Mengen an organischen Lösungsmitteln

Um die Organosilikatputze,- und Farben auch für den Innenbereich einsetzen zu können, müssen sie immer strengeren Auflagen in bezug auf die nach dem Auftragen im Innenbereich feststellbaren Emissionen erfüllen. Verursacher solcher Emissionen können insbesondere in der Farbzusammensetzung enthaltene Aldehyde und organische flüchtige Lösungsmittel sein.

Innenraumfreundliche Farben sollten insbesondere keine Lösungsmittel enthalten. Lösungsmittel können entweder in der Gesamtformulierung, aber auch in den einzelnen Komponenten solcher Organosilikatputze,- und Farben, z.B. in den Stabilisatoren enthalten sein.
Die den Organosilikatputze,- und Farben beigefügten Stabilisatoren können daher eine wesentliche Ursache dafür sein, daß der strenge VOC - Grenzwert überschritten wird, da die Stabilisatoren üblicherweise in organischen Lösungsmitteln, wie Propylenglycol, hergestellt werden. "VOC" bedeutet in diesem Zusammenhang "volatile organic compounds" oder flüchtige organische Verbindungen bzw. Lösungsmittel.

Der vorliegenden Erfindung lag die Aufgabe zugrunde, neue Stabilisatoren bereitzustellen, die vorzugsweise dazu beitragen, daß die mit ihnen hergestellten Organosilikatputze,- und Farben besonders niedrige Gehalte an Lösungsmitteln, bzw. nur im Spurenbereich vorhandene Mengen davon, enthalten. Die Stabilisatoren sollten vor allem die Rheologie, d.h. die Viskosität der Farb, - und Putzformulierungen natürlich auch nicht verschlechtern.

Gelöst wird diese Aufgabe durch tertiäre Amine der allgemeinen Summenformel 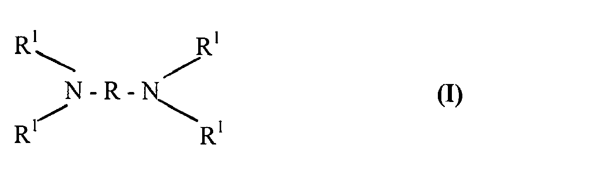 wobei
R = (CH₂)ₙ und n = 1-8 , bevorzugt n = 2 - 6, sowie R¹ = - CH₃ ; - CH₂ - CH₃ ; - CH₂ - CH₂ - OH ; - CH₂ - CH (OH) - CH_{3,} die jeweils gleich oder verschieden voneinander sein können,

Als Verbindungen der allgemeinen Summenformel (I) sind in bezug auf geeignete erfindungsgemäße Stabilisatoren mit R = (CH₂)ₙ und R¹ = - CH₃ ; - CH₂ - CH₃ besonders N,N,N',N'-Tetramethylethylendiamin, N,N,N',N'-Tetramethyl-1,3-Propandiamin, N,N-Diethyl-,N',N'-dimethyl-1,3-propandiamin und N,N,N',N'-Tetramethyl-1,6-hexandiamin zu nennen.
Als solche Verbindungen mit R = (CH₂)ₙ - X - (CH₂)ₙ , mit X = N - R¹ und R¹ = - CH₃ ; - CH₂ - CH₃ sind N,N,N',N",N"-Pentamethyldiethylentriamin und N,N,N',N",N"-Pentamethyldipropylendiamin erwähnenswert.

Von den unter die allgemeine Summenformel (I) fallenden Verbindungen ist die Verbindung N,N,N',N'-Tetrakis(2-hydroxypropyl)ethylendiamin besonders geeignet und deshalb bevorzugt zu verwenden.
Ein Verfahren zur Herstellung dieser Verbindungen der allg. Formel (I) kann man der US -2,697,118 entnehmen. Der bevorzugte Vertreter dieser Amine die oben erwähnte N,N,N',N'-Tetrakis(2-hydroxypropyl)ethylendiamin kann aber auch kommerziell z.B. von der Fa. Fluka bezogen werden. Die Verwendung dieser Amine als Stabilisator für Organosilikatputze,- und Farben ist diesem US Patent nicht erwähnt.
Mit diesen Verbindungen können Putz und Farbrezepturen formuliert werden, die einen stark hydrophilen Charakter haben, im alkalischen, wäßrigen Medium löslich und über einen langen Zeitraum, im Bereich von Tagen und Monaten hinweg stabil sind. Unter dem Begriff Stabilität versteht der Fachmann in diesem Zusammenhang die Stabilität der Viskosität, d.h. die geringe Tendenz zum Eindicken der Fertigformulierungen, die diese Stabilisatoren enthalten.

GB 1017456 offenbart eine Beschichtungszusammensetzung enthaltend ein Alkali-stabilisiertes, kolloidales Silicasol als Bindemittel und N, N, N, N Tetramethyl 1, 3-butanediamin zur Stabilisierung des Sols.

Die gemäß der allgemeinen Summenformel (I) erhaltenen Stabilisatoren für Organosilikatputze,- und Farben können im Außen- oder Innenbereich verwendet werden. Die Stabilisatoren zeichnen sich dadurch aus, daß sie organische flüchtige Lösungsmittel nur im Spurenbereich enthalten bzw. ganz frei davon sind. Insbesondere zeichnen sich die erfindungsgemäß erhaltenen Stabilisatoren durch einen Gehalt an organischem, flüchtigem Lösungsmittel von weniger als 100 ppm bevorzugt weniger als 50 ppm aus.

Im folgenden wird die Erfindung anhand von Beispielen von Putz und Farbrezepturen, die den erfindungsgemäßen Stabilisator enthalten, näher beschrieben.

### I. Formulierung für eine Wasserglasfarbe enthaltend einen erfindungsgemäßen Stabilisator

### Beispiel I.

| | |
|---|---|
| Bindemittel (Acronal 290 D) | 80,00 |
| Mineralischer Füllstoff, insgesamt: (Talcum, Kaliumsilikat, Kalziumcarbonat, in verschiedenen Körnungen und Gewichtsanteilen) | 620,00 |
| Pigment/TiO₂ | 100,00 |
| Filmbildehilfsmittel | 5,00 |
| Verdickungsmittel | 5,00 |
| Hydrophobierungsmittel | 20,00 |
| Kalilauge (10%ig) zur Einstellung des gewünschten pH-Werts | 1,00 |
| erfindungsgemäßer Stabilisator | 5,00 |
| Wasser | 164,00 |

Alle Angaben sind Gewichtsprozent Angaben

### II. Formulierung für Wasserglasputz, enthaltend einen erfindungsgemäßen Stabilisator

### Beispiel II.

| | |
|---|---|
| Bindemittel (Acronal 290 D) | 50,00 |
| Mineralischer Füllstoff, insgesamt: (Marmor unterschiedlicher Körnung, Kaliumsilikat, Kalziumcarbonat, Glimmer) | 825,00 |
| Glasfasern | 5,00 |
| Filmbildehilfsmittel | 5,00 |
| Verdickungsmittel | 2,50 |
| Erfindungsgemäßer Stabilisator | 4,00 |
| Hydrophobierungsmittel | 20,00 |
| Wasser | 88,50 |

### Anwendungstechnischer Test

Die Viskosität von Wasserglas-Farbformulierungen für den Innenbereich wurde zur Auswertung nach 1 Tag, nach 14 tagen und nach 28 Tagen mit Brookfield Rotationsviskosimeter bei Raumtemperatur gemessen. Dabei ergaben sich folgende Werte in mPa s:

| | **1 Tag** | **14 Tage** | **28 Tage** |
|---|---|---|---|
| Farbe n.d..St.d.Technik enthaltend einen quaternisierten | | | |
| Stabilisator | 20000 | 47000 | 48250 |
| Formulierung ohne Stabilisator | 22000 | 47500 | 69000 |
| Handelsübliche Formulierung 1* | 22750 | 41050 | 47500 |
| Handelsübliche Formulierung 2* | 21750 | 42000 | 46000 |
| Erfindungsgemäße Formulierung** | 19000 | 40750 | 44100 |

| | | | |
|---|---|---|---|
| • * das ist eine Formulierung, die einen quatemisierten Amin Stabilisator mit VOC enthielt. • ** In der erfindungsgemäßen Formulierung befindet sich ein VOC armer und nicht quaternisierter Stabilisator, VOC kleiner als 100 ppm z.B. N,N,N',N'-Tetrakis(2-hydroxypropyl)ethylendiamin | | | |

In der beschriebenen Farbrezeptur bewirkte der erfindungsgemäße Stabilisator, dass sich die Viskosität auch nach 28 Tagen stabil verhielt, d.h. niedriger war im Vergleich zu handelsüblichen Formulierungen, die Stabilisatoren enthielten, die quartemisiert waren und beträchtliche Mengen an VOC enthielten. Diese Viskositätswerte wirken sich sehr günstig auf die Verarbeitbarkeit dieser Farben aus, d.h. sie sind leichter zu verstreichen und zu verteilen.

## Patentansprüche

1. Verwendung von tertiären Aminen der allgemeinen Summenformel (I) 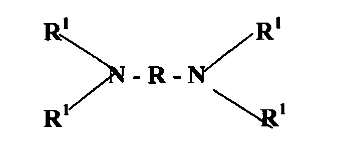 wobei
R entweder (CH₂)ₙ ist mit n =1-8, R¹ = CH₃ ; -CH₂ -CH₃; CH₂-CH₂-OH; -CH₂-CH(OH)-CH₃, die jeweils gleich oder verschieden voneinander sein können oder R = (CH₂)ₙ-X-(CH₂) mit X=N-R¹ und R¹ = CH₃ oder CH₂CH₃ ist, als Stabilisatoren für Organosilikatputze und Organosilikatfarben für den Außen- oder den Innenbereich.

2. Verwendung von tertiären Aminen nach Anspruch 1, **dadurch gekennzeichnet, dass** in der allgemein Summenformel (I) der Index n=2 bis 6 ist.

3. Verwendung nach Anspruch 1 oder 2, **dadurch gekennzeichnet, dass** der Stabilisator organische, flüchtige Lösungsmittel unter 100 ppm, bevorzugt unter 50 ppm enthält.

4. Organosilikatputze, **dadurch gekennzeichnet, daß** sie einen Stabilisator gemäß einem der Ansprüche 1 bis 3 enthalten.

5. Organosilikatfarben, **dadurch gekennzeichnet, dass** sie einen Stabilisator gemäß einem der Ansprüche 1 bis 3 enthalten.

## Claims

1. The use of tertiary amines of the general structural formula (1) 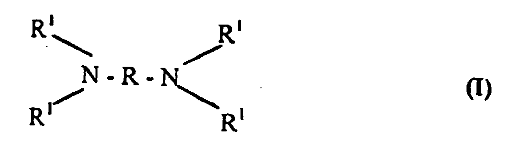 whereby
R is either (CH₂)ₙ with n=1-8, R' = CH₃; -CH₂ - CH₃; CH₂-CH₂-OH; -CH₂-CH(OH)-CH₃, which may be identical or differ from each other or R = (CH₂)n-X-CH₂) with X=N=R' and R' = CH₃ or CH₂CH₃, as stabilizers for organosilicate cements and organosilicate paints for indoor and outdoor applications.

2. The use of tertiary amines in accordance with Claim 1, wherein the index is n = 2 to 6 in the general structural formula.

3. The use in accordance with Claim 1 or 2, wherein the stabilizer contains organic volatile solvents below 100 p.p.m. , preferentially below 50 p.p.m.

4. Organosilicate cements containing a stabilizer in accordance with one of Claims 1 to 3.

5. Organosilicate paints containing a stabilizer in accordance with one of Claims 1 to 3.

## Revendications

1. Utilisation d'amines tertiaires de la formule brute générale (1) 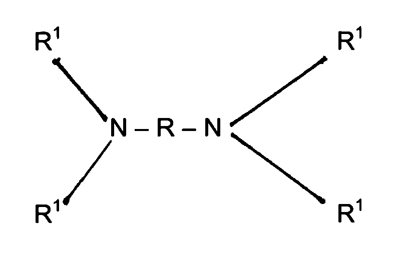 et plus précisément
R ou (CH₂) est avec n = 1-8, R^{t} = CH₃ ; -CH₂ -CH₃ ; CH₂-CH₂-OH ; -CH₂-CH(OH)-CH₃, qui peuvent être chacun identiques ou différents les uns des autres, ou R = (CH₂)ₙ-X-(CH₂) avec X=N-R¹ et R¹ = CH₃, ou CH₂CH₃, un stabilisateur pour les enduits en organosilicate et les peintures en organosilicate pour les zones extérieures et intérieures.

2. Utilisation d'amines tertiaires selon la spécification 1, sachant que dans la formule brute générale (1), l'index n=2 va jusqu'à 6.

3. Utilisation selon la spécification 1 ou 2, sachant que le stabilisateur contient des solvants organiques, volatils inférieurs à 100 ppm, mais de préférence inférieurs à 50 ppm.

4. Enduits en organosilicate, sachant que ceux-ci contiennent un stabilisateur selon l'une des spécifications de 1 à 3.

5. Peintures en organosilicate, sachant que celles-ci contiennent un stabilisateur selon l'une des spécifications de 1 à 3.
